**Europäisches Patentamt**

**European Patent Office**

**Office européen des brevets**

(19)

(11) Publication number : **0 504 068 A2**

(12) # EUROPEAN PATENT APPLICATION

(21) Application number : **92400675.2**

(22) Date of filing : **13.03.92**

(51) Int. Cl.⁵ : **H04N 1/42, H04N 1/21**

(30) Priority : **14.03.91 JP 74661/91**
**20.02.92 JP 70222/92**

(43) Date of publication of application :
**16.09.92 Bulletin 92/38**

(84) Designated Contracting States :
**DE FR GB**

(71) Applicant : **CANON KABUSHIKI KAISHA**
**30-2, 3-chome, Shimomaruko, Ohta-ku**
**Tokyo (JP)**

(72) Inventor : **Iimoto, Keiichi, c/o Canon Kabushiki**
**Kaisha**
**30-2, 3-chome, Shimomaruko**
**Ohta-ku, Tokyo (JP)**

(74) Representative : **Rinuy, Santarelli**
**14, avenue de la Grande Armée**
**F-75017 Paris (FR)**

(54) **Facsimile communication apparatus.**

(57) A facsimile server connected to a LAN (local area network) including a file server and connected to a public telephone network includes a voice response control unit for performing a predetermined voice response in accordance with an input from the public telephone network, a storage unit for storing the telephone number of a facsimile apparatus and the number of a file for which transmission is requested input in accordance with this voice response, and a transmission unit for taking out the file for which transmission is requested from the file server on the LAN based on the number of the file. The transmission unit makes a call to the public telephone network based on the telephone number, and transmits the file for which transmission is requested. It is thereby possible to assign a file in the file server of the LAN from a terminal of the public telephone network, and to take out the assigned file as facsimile information.

EP 0 504 068 A2

FIG. 2

## BACKGROUND OF THE INVENTION

### 1. Field of the Invention

This invention relates to a fascimile communication apparatus (a facsimile server) which is connected to a public network and a local area network (hereinafter termed a LAN) system, and stores data received from the public network in a file unit (a file server) within the LAN system.

### 2. Description of the Prior Art

In a conventional approach, a document formed and edited by a work station (hereinafter termed a terminal) on a LAN system is transmitted to another terminal on the LAN system via a LAN, or to a facsimile apparatus or the like at the side of a public telephone network via a modem within a facsimile server connected to the LAN.

A conventional facsimile server, however, transmits data stored in a file server to the side of the public telephone network only in response to an operator's instruction from a terminal within the LAN.

Accordingly, in order to tansmit data stored in the file server to a facsimile apparatus at the side of the public telephone network without using a terminal on the LAN, the conventional approach uses a disadvantageous procedure in which the data must be first printed and the printed data must be transmitted using a facsimile apparatus which is present in the vicinity.

Hence, it is desired to provide a facsimile server for which the request for data transmission can be performed also from the side of the public telephone network. However, there exist problems in establishing which users will have access to the data and how the data is to be assigned from the side of the public telephone network.

## SUMMARY OF THE INVENTION

The present invention has been made in consideration of the above-described problems.

It is an object of the present invention to improve a facsimile communication apparatus.

It is another object of the present invention to provide a facsmile communication apparatus which accesses data stored in a file unit within a LAN in accordance with a request from a terminal of a public network, and transmits the data of the file unit to the terminal of the public network.

It is still another object of the present invention to arrange a system so that a terminal of a public network can access data stored in a file unit within a LAN, and take out the data by facsimile communication.

These and other objects and features of the present invention will become more apparent from the following detailed description of the preferred embodiment taken in connection with the accompanying drawings.

## BRIEF DESCRIPTION OF THE DRAWINGS

FIG. 1 is a diagram showing the configuration of a network system to which a facsimile server according to an embodiment of the present invention is connected;

FIG. 2 is a block diagram showing the configuration of the facsimile server; and

FIG. 3 is a flowchart showing processing of voice response control and switching control of G3 facsimile communication in the embodiment.

## DETAILED DESCRIPTION OF THE PREFERRED EMBODIMENT

The preferred embodiment of the present invention will now be described in detail with reference to the drawings.

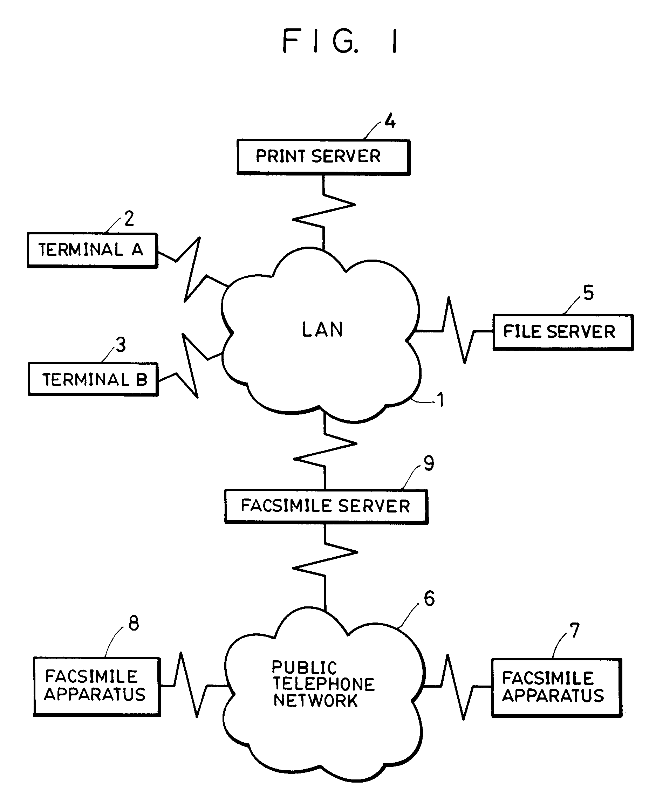

FIG. 1 is a diagram showing the configuration of a network system to which a facsimile server according to the embodiment is connected.

At least two terminals (work stations) 2 and 3, a print server 4 and a file server (data storage unit) 5 are connected to a LAN 1.

The illustrated system is one wherein facsimile apparatuses 7 and 8 capable of performing G3-standard communication are connected to a public telephone network 6.

A facsimile server 9 of the present embodiment distributes data from the LAN 1 to the public telephone network 6, and vice versa.

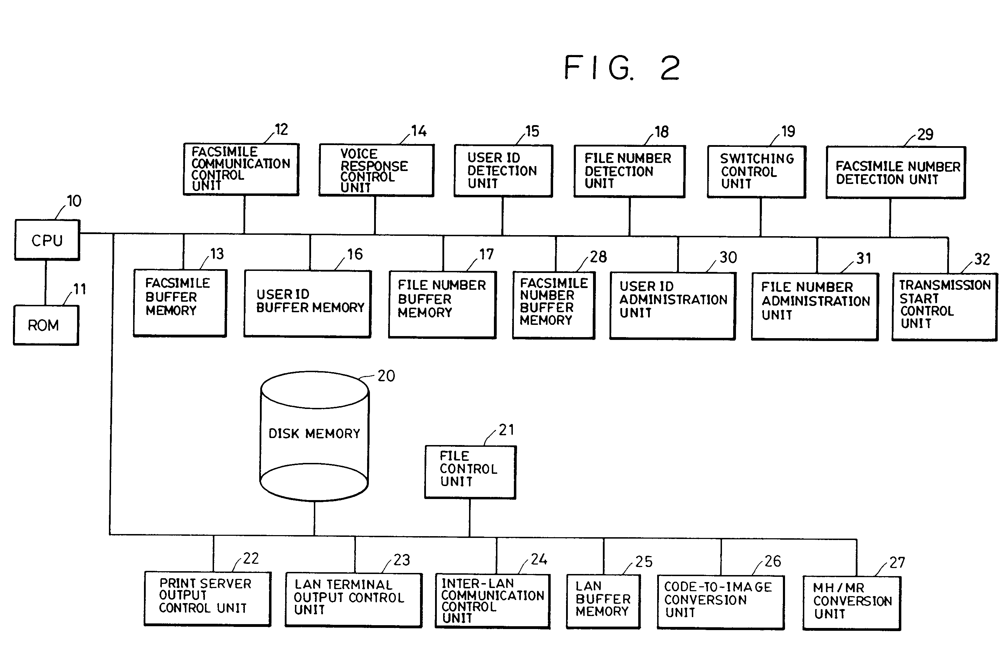

FIG. 2 is a block diagram showing the configuration of the facsimile server 9.

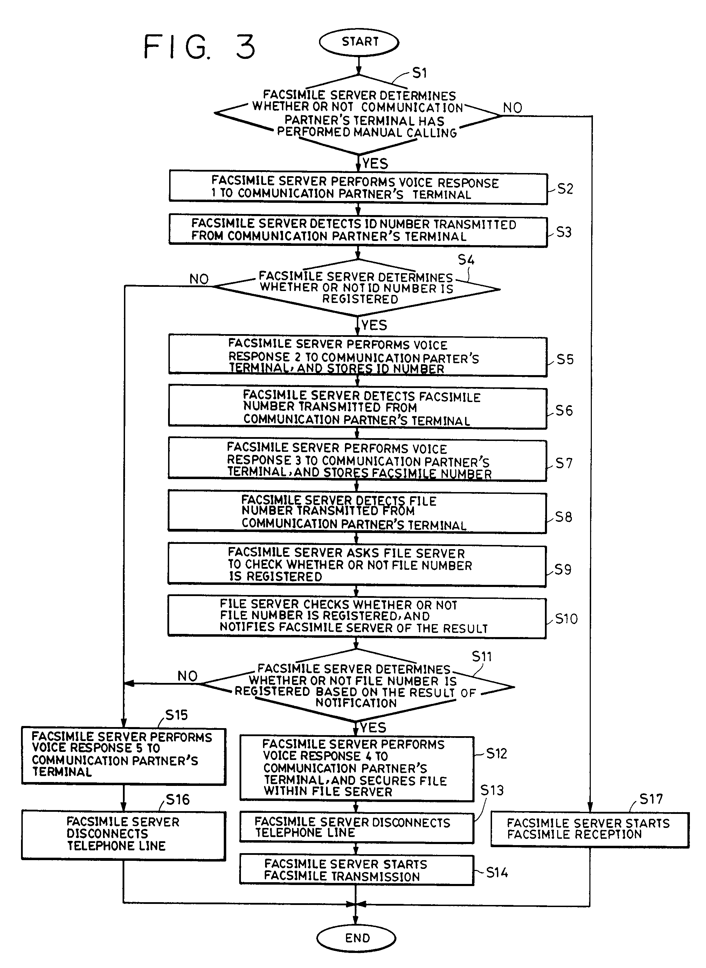

A CPU 10 controls the entire apparatus in accordance with a control program as shown in FIG. 3 or the like incorporated in a ROM (read-only memory) 11. The ROM 11 is a memory for storing the above-described program, voice data for performing voice response, and the like.

A facsimile communication control unit 12 performs control in G3 facsimile communication. A facsimile buffer memory 13 temporarily stores data to be transmitted and received data when G3-facsimile data are transmitted and received, and absorbs a speed difference between the transfer speed of a disk file and the speed of the network.

A voice response control unit 14 controls voice responses to request the input of a user ID number and the like in response to a call from the public telephone network 6. A user ID number detection unit 15 detects the user ID number transmitted from the caller using a DTMF signal or the like. A user ID buffer memory 16 temporarily stores the transmitted user ID number. A user ID administration unit 30 is a table for administrating previously-registered user ID numbers.

A file number buffer memory 17 temporarily stores a file number transmitted from the caller using a DTMF signal or the like. A file number detection unit 18 detects the transmitted file number. A file number administration unit 31 is a table for administrating previously-registered file numbers.

A facsimile number buffer memory 28 temporarily stores a facsimile number transmitted from the caller. A facsimile number detection unit 29 detects the transmitted facsimile number.

A transmission start control unit 32 compares the file number and the user ID detected by the file number detection unit 18 and the user ID detection unit 15 with file numbers and user IDs registered in a file number administration unit 31 and a user ID administration unit 30, respectively, and instructs the facsimile communication control unit 12 toperform transmission only when the detected file number and user ID coincide with any of the registered file numbers and user IDs, respectively.

A switching control unit 19 switches between facsimile communication control and voice response control.

A disk memory 20 is a large-capacity memory for storing image files and attribute information of respective image files. A file control unit 21 controls the files stored in the disk memory 20.

A print server output control unit 22 outputs a file assigned by the CPU 10 to the print server 4 on the LAN. A LAN terminal control unit 23 outputs the file assigned by the CPU 10 to a terminal on the LAN.

An inter-LAN communication control unit 24 controls communication protocols within the LAN. Data transmitted via the inter-LAN communication control unit 24 are developed in a LAN buffer memory 25.

A code-to-image conversion unit 26 develops a coded document in a bit image. An MH (modified Huffman codes)/MR (modified READ codes) conversion unit 27 compresses/expands a facsimile document filed in the disk memory 20 in the form of MH/MR into a bit image. The coded document received from the LAN is subjected to image expansion by the code-to-image conversion unit 26, is compressed by the MH/MR conversion unit 27, and is filed in the disk memory 20.

FIG. 3 is a flowchart showing the processing of voice response control and switching control of G3 facsimile communication in the above-described configuration of the present embodiment.

Voice response in the present embodiment comprises the following five items:

(1) Voice response 1 --- "Input the ID number".
(2) Voice response 2 --- "Input the telephone number of the facsimile."
(3) Voice response 3 --- "Input the file number."
(4) Voice response 4 --- "Facsimile transmission will be started. Hang up the receiver."

(5) Voice response 5 --- "The assigned number is not registered."

When the facsimile server 9 has received a call from the side of the public telephone network 6, the CPU 10 determines whether the call is a manual call or an automatic call. For example, if a calling tone (CNG) used for identifying a calling station can be detected from the caller's terminal within a time T1 (30 - 40 seconds), the call is determined to be an automatic call. If the calling tone cannot be detected within the time T1, the call is determined to be a manual call. In performing this further, the CPU 10 uses the facsimile communication control unit 12 in accordance with a control program stored in the ROM 11 (step S1). In the case of an automatic call, the CPU 10 determines that an image will be transmitted from a conventional facsimile apparatus, the facsimile communication control unit 12 of the facsimile server 9 starts facsimile reception, and the processing is terminated (step S17).

In the case of a manual call in step S1, the CPU 10 determines that the call comprises a request for processing to transmit data of the file server 5 to a facsimile apparatus. The CPU 10 transmits a command to the switching control unit 19, which switches the control operation from facsimile communication control to voice response control. The voice response control unit 14 then performs the voice response 1 stored within the ROM 11 (step S2).

After this response, the user ID detection unit 15 detects the ID number transmitted from the caller's terminal using an DTMF signal or the like, and notifies the transmission start control unit 32 of the result of the detection (step S3). The transmission start control unit 32 determines whether or not the ID number is registered in the user ID administration unit 30 (step S4). If the ID number is not registered, the voice response control unit 14 performs the voice response 5 stored within the ROM 11, and the switching control unit 19 switches the control operation to the facsimile communication control unit 12 (step S15). Subsequently, the facsimile communication control unit 12 disconnects the line to terminate the processing (step S16).

If the ID number is registered in step S4, the voice response control unit 14 performs the voice response 2 within the ROM 11, and the transmission start control unit 32 stores the detected ID number in the user ID buffer memory 16 (step S5). After this response, the facsimile number detection unit 29 detects the telephone number (facsimile number) of the facsimile input from the caller using a DTMF signal or the like (step S6).

Subsequently, the voice response control unit 14 performs the voice response 3 stored within the ROM 11, the transmission start control unit 32 stores the detected facsimile number in the facsimile number buffer memory 28 (step S7). Subsequently, the file number detection unit 18 detects the file number input from the caller using a DTMF signal or the like (step S8).

The transmission start control unit 32 asks the file server 5 to check whether or not the file number detected in step S8 is registered (step S9). The file server 5 notifies the transmission start control unit 32 of the result of the check whether or not the file number detected in step S8 is registered (step S10). Subsequently, the transmission start control unit 32 determines whether or not the file number is registered based on the result of the notification in step S10 (step S11). If the result of the determination is negative, the voice response control unit 14 performs the voice response 5 stored within the ROM 11, and the switching control unit 19 switches the control operation to the facsimile communication control unit 12 (step S15). Subsequently, the facsimile communication control unit 12 disconnects the line to terminate the processing (step S16).

If the result of the determination in step S11 is affirmative, the voice response control unit 14 performs the voice response 4 stored within the ROM 11, the transmission start control unit 32 then stores the file within the file server 5 in the desk memory 20, and the switching control unit 19 switches the control operation to the facsimile communication control unit 12 (step S12). Subsequently, the facsimile communication control unit 12 disconnects the line (step S13).

Subsequently, the transmission start control unit 32 develops the data of the file number secured in step S12 into a bit image by the code-to-image conversion unit 26, compresses the data by the MH/MR conversion unit 27, subsequently calls the facsimile number detected in step 26 to the public telephone network, and transmits the image to the facsimile apparatus having the facsimile number to terminate the processing (step S14).

In this facsimile transmission processing in step S14, if the facsimile apparatus having the called number is busy, redialing is performed for a predetermined number of times. If facsimile transmission cannot be performed even after the predetermined number of times, a call is made to the terminal having the ID number detected in step S3, and notifies the terminal that facsimile transmission of data of the assigned file could not be performed using a voice message.

According to the above-described embodiment, it is possible to construct a system which can assign data stored in a file unit within a LAN from a terminal of a public network, and take out the assigned data as facsimile information.

While the present invention has been described with respect to what is presently considered to be the preferred embodiment, it is to be understood that the invention is not limited to the disclosed embodiment. The present invention is intended to cover various modifications and equivalent arrangements included within the spirit and scope of the appended claims.

## Claims

1. A facsimile communication apparatus connected to a local area network system including a data storage unit for storing various kinds of data, and further connected to a public network having a plurality of terminals, said apparatus comprising:
   means for receiving information for accessing the data storage unit from a first terminal of the public network, said information assigning a second terminal of the public network;
   means for accessing the data storage unit in accordance with said information and for taking out data corresponding to said information from the data storage unit;
   storing means for storing the data; and
   means for transmitting data stored in said storing means to the second terminal of the public network assigned by said information.

2. An apparatus according to Claim 1, wherein said transmitting means transmits data stored in said storing means while converting the data into facsimile information.

3. An apparatus according to Claim 1, further comprising voice response means for transmitting a voice message for instructing a method of inputting said information to an operator of the first terminal of the public network.

4. A facsimile communication apparatus connected to a local area network system including a data storage unit storing various kinds of data, and further connected to a public network having a plurality of terminals, said apparatus comprising:
   means for receiving information from a first terminal of the public network, said information being information for accessing the data storage unit and assigning data to be transmitted to a second terminal of the public network;
   control means for accessing the data storage unit in accordance with said information and for taking out data assigned by said information from the data storage unit; and
   means for transmitting the data taken out by said control means to the second terminal of the public network assigned by said information,
   wherein said control means determines whether or not the first terminal of the public network can access the data storage unit, and whether or not the data assigned by said information are stored in the data storage unit, and takes out the data from the data storage unit in accordance with a result of the determinations.

5. An apparatus according to Claim 4, further comprising voice response means for transmitting a voice message for instructing a method of inputting said information to an operator of the first terminal of the public network.

6. A method of transmitting data stored in a data storage unit of a local area network system to a terminal of a public network via a facsimile communication apparatus, said method comprising the steps of:

transmitting information usable to access data stored in the data storage unit from the terminal of the public network to the facsimile communication apparatus;

the facsimile communication apparatus accessing the data storage unit in accordance with said information, taking out data assigned by said information from the data storage unit and storing the taken-out data, and transmitting the taken-out data to a terminal assigned by said information while converting the data into facsimile information.

7. A method according to Claim 6, wherein said facsimile communication apparatus determines whether or not the terminal of the public network can access the data storage unit, and whether or not data assigned by said information are stored in the data storage unit, and takes out the data from the data storage unit in accordance with the determinations.

8. A facsimile communication apparatus connected to a local area network system including a file unit, and further connected to a public network, said apparatus comprising:

input means for inputting information from the public network;

voice response control means for performing a predetermined voice response in accordance with an input from the public network by said input means;

telephone number storing means for storing a telephone number of a facsimile apparatus at a side of the public network input by said input means in accordance with said voice response;

file storing means for storing a number of a file for which transmission is requested, said number being input by said input means in accordance with said voice response;

file control means for disconnecting an already connected public telephone line after effectively receiving the telephone number and the number of the file for which transmission is requested of the facsimile apparatus from said public network, taking out said file for which transmission is requested from the file unit of the local area network system, and storing said file; and

transmission control means for calling the telephone number of the facsimile apparatus to the public network after securing said file for which transmission is requested by said file control means, and transmitting said file for which transmission is requested.

9. An apparatus according to Claim 8, further comprising means for recognizing a user identifying number input from said input means, and user administration means for receiving a transmission request based on said voice response only for a user identifying number previously registered in said apparatus.

10. An apparatus according to Claim 8, further comprising means for administrating said number of said file for which transmission is requested input by said input means, and file administration means for receiving a transmission request based on said voice response only for a file number that was peviously registered in said apparatus.

# F I G. I

# FIG. 2

CPU 10

ROM 11

FACSIMILE COMMUNICATION CONTROL UNIT 12

VOICE RESPONSE CONTROL UNIT 14

USER ID DETECTION UNIT 15

FILE NUMBER DETECTION UNIT 18

SWITCHING CONTROL UNIT 19

FACSIMILE NUMBER DETECTION UNIT 29

FACSIMILE BUFFER MEMORY 13

USER ID BUFFER MEMORY 16

FILE NUMBER BUFFER MEMORY 17

FACSIMILE NUMBER BUFFER MEMORY 28

USER ID ADMINISTRATION UNIT 30

FILE NUMBER ADMINISTRATION UNIT 31

TRANSMISSION START CONTROL UNIT 32

DISK MEMORY 20

FILE CONTROL UNIT 21

PRINT SERVER OUTPUT CONTROL UNIT 22

LAN TERMINAL OUTPUT CONTROL UNIT 23

INTER-LAN COMMUNICATION CONTROL UNIT 24

LAN BUFFER MEMORY 25

CODE-TO-IMAGE CONVERSION UNIT 26

MH/MR CONVERSION UNIT 27

EP 0 504 068 A2

FIG. 3

START

S1
FACSIMILE SERVER DETERMINES WHETHER OR NOT COMMUNICATION PARTNER'S TERMINAL HAS PERFORMED MANUAL CALLING — NO

YES

FACSIMILE SERVER PERFORMS VOICE RESPONSE 1 TO COMMUNICATION PARTNER'S TERMINAL — S2

FACSIMILE SERVER DETECTS ID NUMBER TRANSMITTED FROM COMMUNICATION PARTNER'S TERMINAL — S3

S4
NO — FACSIMILE SERVER DETERMINES WHETHER OR NOT ID NUMBER IS REGISTERED

YES

FACSIMILE SERVER PERFORMS VOICE RESPONSE 2 TO COMMUNICATION PARTER'S TERMINAL, AND STORES ID NUMBER — S5

FACSIMILE SERVER DETECTS FACSIMILE NUMBER TRANSMITTED FROM COMMUNICATION PARTNER'S TERMINAL — S6

FACSIMILE SERVER PERFORMS VOICE RESPONSE 3 TO COMMUNICATION PARTNER'S TERMINAL, AND STORES FACSIMILE NUMBER — S7

FACSIMILE SERVER DETECTS FILE NUMBER TRANSMITTED FROM COMMUNICATION PARTNER'S TERMINAL — S8

FACSIMILE SERVER ASKS FILE SERVER TO CHECK WHETHER OR NOT FILE NUMBER IS REGISTERED — S9

FILE SERVER CHECKS WHETHER OR NOT FILE NUMBER IS REGISTERED, AND NOTIFIES FACSIMILE SERVER OF THE RESULT — S10

S11
NO — FACSIMILE SERVER DETERMINES WHETHER OR NOT FILE NUMBER IS REGISTERED BASED ON THE RESULT OF NOTIFICATION

YES

S15
FACSIMILE SERVER PERFORMS VOICE RESPONSE 5 TO COMMUNICATION PARTNER'S TERMINAL

FACSIMILE SERVER PERFORMS VOICE RESPONSE 4 TO COMMUNICATION PARTNER'S TERMINAL, AND SECURES FILE WITHIN FILE SERVER — S12

S17
FACSIMILE SERVER STARTS FACSIMILE RECEPTION

S16
FACSIMILE SERVER DISCONNECTS TELEPHONE LINE

FACSIMILE SERVER DISCONNECTS TELEPHONE LINE — S13

FACSIMILE SERVER STARTS FACSIMILE TRANSMISSION — S14

END